# EUROPÄISCHE PATENTANMELDUNG

(11) **EP 1 873 509 A2**
(43) Veröffentlichungstag der Anmeldung: **02.01.2008**
(21) Anmeldenummer: 07010928.5
(22) Anmeldetag: 02.06.2007
(51) Int. Cl.: G01M 19/00

(54) **Dummykörper zur Erprobung von Sitz-, Liege- und Stützpolstern von gepolsterten Sitz- und Liegemöbeln**

(30) Priorität: 28.06.2006 DE 102006030345
(71) Anmelder: IAV GmbH Ingenieurgesellschaft Auto und Verkehr, 10587 Berlin (DE)
(72) Erfinder: Liebelt, Ingo, 29556 Suderburg (DE); Schultz, Michael, 38518 Gifhorn (DE); Zottmann, Detlef, 38518 Gifhorn (DE)
(74) Vertreter: Bürger, Peter

(57) **Zusammenfassung**

Die Erfindung betrifft einen Dummykörper zur Erprobung von Sitz-, Liege- und Stützpolstern von gepolsterten Sitz- und Liegemöbeln.

Der Erfindung liegt die Aufgabe zugrunde, einen Dummykörper zur Erprobung von Sitz-, Liege- und Stützpolstern von gepolsterten Sitz- und Liegemöbeln zu entwickeln, mit dem variabel ein komplexes Zusammenspiel von verschiedenen Muskeln realitätsnah simuliert werden kann und der sich durch einen kostengünstig und einfachen Aufbau auszeichnet und dessen Verschleißteile schnell und kostengünstig ersetzt werden können.

Durch die Anordnung von mehreren längs oder quer zur Sitz- oder Liegefläche nebeneinander verstellbar angeordneter Scheiben mit hinsichtlich des Härtegrades unterschiedlichen Materialeigenschaften, kann die zu simulierende Muskelhärte eines Dummykörpers variabel entsprechend eines vorgegebenen Versuchsprogrammes eingestellt werden.

## Beschreibung

Die Erfindung betrifft einen Dummykörper zur Erprobung von Sitz-, Liege- und Stützpolstern von gepolsterten Sitz- und Liegemöbeln mit den im Oberbegriff des Patentanspruches 1 genannten Merkmalen.

Vorbekannt ist durch die Schrift DE 196 01 974 A1 ein Verfahren zur Beurteilung des Sitzkomforts eines Sitzpolsters, welches für die Komfortuntersuchung mechanisch belastet wird. Die Belastung kann mit unterschiedlich großen Menschen durchgeführt werden oder erfolgt mit einem speziell gestalteten Druckstempel, welcher in den zu testenden Fahrzeugsitz gedrückt wird. Während der Belastung wird die Druckverteilung auf der Sitzfläche oder auch auf der Lehnenfläche mit einer zwischen Sitz und Druckstempel gelegten Messmatte ermittelt.

Vorbekannt sind durch die Schriften DE 196 01 971 C2 und DE 198 10 641 C1 Vorrichtungen zur Beurteilung des Sitzkomforts eines Sitzpolsters, wobei ein speziell gestalteter Sitzprüfstempel in den zu testenden Fahrzeugsitz gedrückt wird und die Form des Stempels eine möglichst realitätsnahe Belastung des Sitzes gewährleistet. Der Sitzprüfstempel ist dabei dem Becken, dem Oberschenkel und einschließlich der Oberschenkelgelenke eines menschlichen Skeletts nachgebildet. Der Sitzprüfstempel ist mit einer Überpolsterung versehen, so dass durch ihn der Becken- und Oberschenkelbereich eines menschlichen Körpers hinsichtlich des Skeletts und des Muskel-, Binde- und Fettgewebes naturgetreu nachgebildet ist.
Mit der Vorrichtung gemäß DE 198 10 641 C1 werden zwei auswechselbare Druckstücke wahlweise in dieselbe Arbeitsstellung gebracht.

Nachteilig beim Stand der Technik ist, dass zur Realisierung von unterschiedlichen Muskelhärten, insbesondere dem angespannten und dem entspannten Muskelzustand, bei der Erprobung von Sitzsystemen verschiedene Sitzprüfstempel eingesetzt werden müssen. Durch die dazu benötigte Vielzahl von Prüfstempeln werden die Versuchsreihen erheblich verteuert. Ein weiterer Nachteil besteht darin, dass nach einer entsprechenden Anzahl von Testdurchläufen die Prüfkörper verschleißen und somit komplett ausgewechselt bzw. ersetzt werden müssen.

Der Erfindung liegt die Aufgabe zugrunde, einen Dummykörper zur Erprobung von Sitz-, Liege- und Stützpolstern von gepolsterten Sitz- und Liegemöbeln zu entwickeln, mit dem variabel ein komplexes Zusammenspiel von verschiedenen Muskeln realitätsnah simuliert werden kann und der sich durch einen kostengünstig und einfachen Aufbau auszeichnet und dessen Verschleißteile schnell und kostengünstig ersetzt werden können.

Erfindungsgemäß wird die Aufgabe durch die Merkmale des Patentanspruches 1 gelöst.

Durch die Anordnung von mehreren längs oder quer zur Sitz- oder Liegefläche nebeneinander verstellbar angeordneter Scheiben mit hinsichtlich des Härtegrades unterschiedlichen Materialeigenschaften, kann die zu simulierende Muskelhärte eines Dummykörpers variabel entsprechend eines vorgegebenen Versuchsprogramms eingestellt werden.

Durch Verschiebung der einzelnen Scheiben des Dummykörpers gegeneinander wird die Härte des Dummykörpers entsprechend dem tatsächlichen Muskelaufbau eines Menschen eingestellt und simuliert. Durch entsprechend an den einzelnen Scheiben angeordnete Aktoren kann diese Verstellung auch in der Versuchsphase durchgeführt werden. Durch Programmierung kann das Anspannen der Muskeln in der Bewegungsphase nachgestellt werden.

Ein weiterer Vorteil der erfindungsgemäßen Lösung besteht darin, dass bei einem eventuellen Materialverschleiß der weicheren die Muskel-, Binde- und Fettgewebe simulierenden Scheiben diese schnell und einfach ausgewechselt bzw. ersetzt werden können. Entstehende Kosten durch Verschleiß können somit durch den Austausch einzelner verschlissener Scheiben minimiert werden. Der Austausch eines kompletten Sitzprüfkörpers ist dadurch nicht mehr erforderlich.

Weitere vorteilhafte Ausgestaltungen sind in den Unteransprüchen beschrieben, sie werden in der Beschreibung zusammen mit ihren Wirkungen erläutert.

Anhand von Zeichnungen wird die Erfindung nachfolgend an Ausführungsbeispielen näher beschrieben. In den dazugehörigen Zeichnungen zeigen:
- Fig. 1:: eine schematische Darstellung des Dummykörpers in perspektivischer Ansicht,
- Fig. 2:: eine Einzelheit des Dummykörpers in Explosionsdarstellung,
- Fig. 3:: eine Vorderansicht der erfindungsgemäßen Lösung im Schnitt bei Simulation eines festen Muskelgewebes und
- Fig. 4:: eine Vorderansicht der erfindungsgemäßen Lösung im Schnitt bei Simulation eines weichen Muskelgewebes.

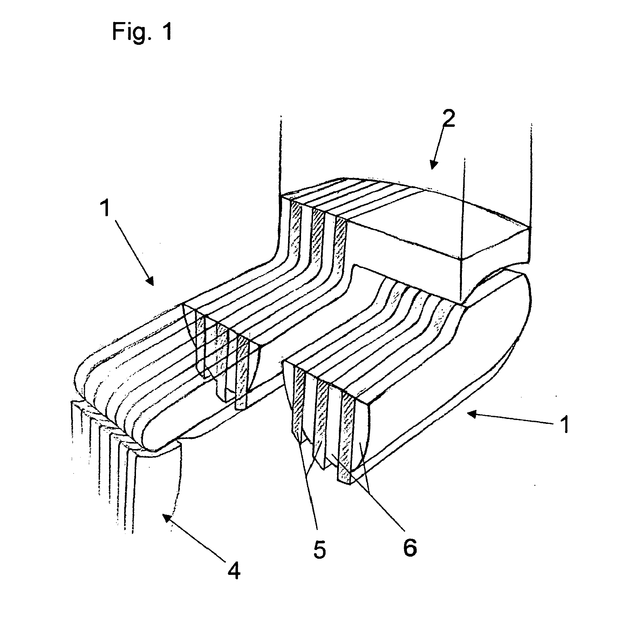

In der Figur 1 ist ein Teil eines Dummykörpers bestehend aus Oberschenkel 1, Beckenbereich 2 und Unterschenkel 4 dargestellt, wie er auch bei der Erprobung von Sitz-, Liege- und Stützpolstern von gepolsterten Sitz- und Liegemöbeln 3 eingesetzt wird. Bei den Sitz- und Liegemöbeln 3 kann es sich dabei um Fahrzeugsitze, Polstermöbel, wie Sessel, Sofas, Liegen, Betten und dergleichen, handeln. Entsprechend der geplanten Versuchsdurchführung zur Erprobung der gepolsterten Sitz- und Liegemöbeln 3 kann der Dummykörper um den Rücken- und Kopfbereich sowie um die Arme zur Erprobung der Sitz-, Liege- und Stützpolster erweitert werden. Der Dummykörper ist mit an sich bekannten Gelenken versehen, mit denen die Bewegungsabläufe eines menschlichen Skeletts simuliert werden können. Der Dummykörper wird insgesamt von einem nicht dargestellten Material in Form einer Kunststofffolie umspannt. Um realitätsnahe Ergebnisse zu erhalten, kann der Dummykörper mit textilen Materialien bekleidet werden.

Erfindungsgemäß besteht der Dummykörper aus mehreren längs oder quer zur Auflagefläche eines Sitz- oder Liegemöbels 3 nebeneinander angeordneten Scheiben 5 und 6. Die Scheiben 5 weisen gegenüber den Scheiben 6 eine unterschiedliche Materialhärte auf, so dass durch das Zusammenspiel von harten und weichen Schichten unterschiedlich harte Bereiche des menschlichen Körpers und der Muskeln dargestellt werden können. Die Scheiben 5 bestehen aus einem gegenüber den Scheiben 6 weicheren Material, wobei zwischen jeweils zwei aus einem härteren Material bestehenden Scheiben 6 eine oder mehrere Scheiben 5 aus weicherem Material angeordnet sind. Die Anzahl und Anordnung der jeweiligen Scheiben 5 und 6 richtet sich nach der Struktur der zu simulierenden Muskeln bzw. Körperteilen und deren Bewegungsrichtung. Die Scheiben 5 und 6 sind in Richtung der Auflagefläche des Dummykörpers auf dem Sitz- oder Liegemöbel 3 in der Scheibenebene der Scheiben 5 oder 6 verstellbar.

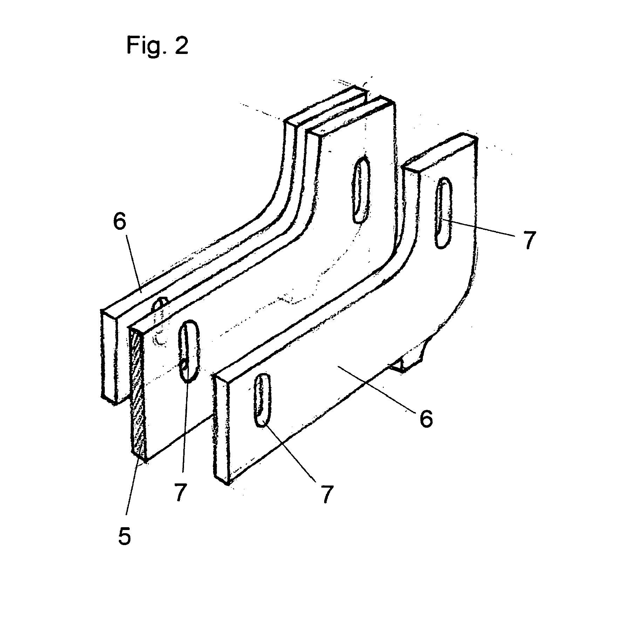

Die Verstellung durch Verschieben der Scheiben 5 und 6 gegeneinander erfolgt entweder manuell oder durch nicht dargestellte Aktoren. Zur Führung der Scheiben 5 und 6 sind in diesen, wie in Figur 2 dargestellt, beispielsweise Langlöcher 7 angeordnet, in denen z.B. Bolzen geführt werden, die gemäß dem Ausführungsbeispiel fest mit den äußeren Scheiben 6 verbunden sind. Bei der manuellen Verstellung werden durch die Langlöcher 7 beispielsweise Schrauben geführt, mit denen die Verspannung zum Beispiel des Oberschenkels 1 erfolgt. Entsprechend der kinematischen Bewegung des Dummykörpers werden durch die Aktoren oder durch manuelle Verstellung einzelne oder alle Scheiben 5 und 6 gleich oder unterschiedlich zueinander verstellt, so dass sowohl angespannte, als auch entspannte Muskelbereiche simuliert werden können.

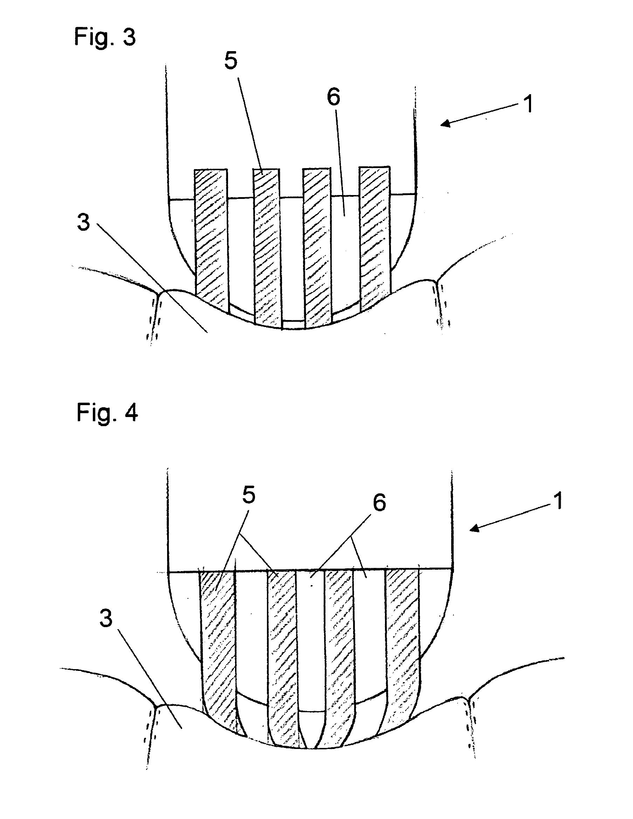

Zur Simulation von den aktiven Muskelbereichen können sowohl die härteren Scheiben 6 als auch die weicheren Scheiben 5 gleiche oder unterschiedliche Materialhärten aufweisen. In der Figur 3 ist ein Oberschenkel 1 im Querschnitt dargestellt, bei dem die weicheren Scheiben 5 nur geringfügig gegenüber den härteren Scheiben 6 verstellt wurden. Damit lässt sich eine feste Muskelstruktur darstellen. In Figur 4 ist ein Oberschenkel 1 dargestellt, der eine weichere Muskelstruktur aufweist als in Figur 3 gezeigt. Die weicheren Scheiben 5 sind dabei gegenüber den härteren Scheiben 6 in Richtung der Sitzfläche des Sitz- oder Liegemöbels 3 weiter nach Außen verschoben wurden. Durch unterschiedliche Materialhärten von einzelnen oder von allen Scheiben 5 und 6 lässt sich die Darstellung der Muskelstruktur weiter variieren. Die weicheren Scheiben 5 bestehen vorzugsweise aus einem entsprechenden Kunststoff, während die härteren Scheiben 6 aus einem härteren Kunststoff oder aus Metall, beispielsweise Aluminium, bestehen. Es können aber auch andere Materialien zum Einsatz kommen, die eine entsprechend gewünschte Materialhärte zur Simulation des Skeletts und des Muskel-, Binde- und Fettgewebes eines menschlichen Körpers Rechnung tragen. Zur weiteren Verfeinerung der Simulation des Muskelspieles können die Scheiben 5 und/oder 6 in ihrer Längsrichtung in ein oder mehrere einzelne Teilstücke unterteilt werden, wobei die einzelnen Teilstücke separat verstellbar sind.

Durch den Aufbau des Dummykörpers durch mehrere nebeneinander angeordnete Scheiben 5 und 6 besteht auch die Möglichkeit Messsonden und/oder Messaufnehmer an beliebiger Stelle an und zwischen den Scheiben 5 und 6 anzuordnen. Dadurch können die Messergebnisse des Versuchs genau dokumentiert werden.

Die Scheiben 5 und/oder 6 können auch mit einer Heizvorrichtung versehen werden. Bei einer Versuchsdurchführung bei geringen Temperaturen wird somit eine gleichbleibende Härte des Scheibenpaketes und damit der Muskelstruktur des zu simulierenden Körpers gewährleistet.

Die Scheiben 5 und 6 sind auswechselbar, so dass bei einem Verschleiß von insbesondere weicheren Scheiben 5 diese problemlos ausgewechselt werden können. Um einen entsprechenden Verschleiß der Scheiben 5 ermitteln zu können, sind diese an der Berührungsseite mit dem Sitz- oder Liegemöbel 3 mit einem Profil versehen. Bei einer Unterschreitung einer vorgegebenen Profiltiefe müssen diese Scheiben 5 ausgewechselt werden. Dadurch können die Verschleißkosten wesentlich reduziert werden, da nur einzelne verschlissene Scheiben ausgetauscht werden müssen und nicht eine gesamte Baugruppe ersetzt werden muss.

Der erfindungsgemäß aufgebaute Dummykörper kann natürlich bei entsprechenden Fahrzeugcrashs eingesetzt werden.

### Aufstellung der verwendeten Bezugszeichen

- 1: Oberschenkel
- 2: Beckenbereich
- 3: Sitz- oder Liegemöbel
- 4: Unterschenkel
- 5: Scheibe
- 6: Scheibe
- 7: Langloch

## Patentansprüche

1. Dummykörper zur Erprobung von Sitz-, Liege- und Stützpolstern von gepolsterten Sitz- und Liegemöbeln mit einem auf dem zu prüfenden Sitz- oder Liegemöbel aufsetz- oder auflegbaren Dummykörper dem menschlichen Skelett- und Weichteilen durch Anordnung von Formkörpern mit unterschiedlichen Materialhärten möglichst naturgetreu nachgebildet sind,
**dadurch gekennzeichnet, dass**
der Dummykörper aus mehreren nebeneinander längs oder quer zur Auflagefläche eines Sitz- oder Liegemöbels (3) angeordneten einzeln verstellbaren Scheiben (5; 6) besteht, wobei zwischen jeweils zwei aus einem härteren Material bestehenden Scheiben (6) eine oder mehrere Scheiben (5) aus weicheren Material angeordnet sind.

2. Dummykörper nach Anspruch 1,
**dadurch gekennzeichnet, dass**
die aus einem weicheren Material bestehenden Scheiben (5) und die aus einem härteren Material bestehenden Scheiben (6) in Richtung der Auflagefläche des Dummykörpers auf dem Sitz- oder Liegemöbel (3) in der Scheibenebene der Scheiben (5) oder (6) verstellbar sind.

3. Dummykörper nach Anspruch 1 und 2,
**dadurch gekennzeichnet, dass**
die Verstellung der Scheiben (5; 6) manuell oder durch Aktoren erfolgt.

4. Dummykörper nach Anspruch 1 bis 3,
**dadurch gekennzeichnet, dass**
die weicheren Scheiben (5) variabel wählbare Materialhärten aufweisen.

5. Dummykörper nach Anspruch 1 bis 4,
**dadurch gekennzeichnet, dass**
die härteren Scheiben (6) variabel wählbare Materialhärten aufweisen.

6. Dummykörper nach Anspruch 1 bis 5,
**dadurch gekennzeichnet, dass**
durch eine unterschiedliche Größe der Verschiebung der Scheiben (5) gegenüber den Scheiben (6) und durch variablen Einsatz von Scheiben (5; 6) mit unterschiedlicher Härte unterschiedliche Muskelhärten einstellbar sind.

7. Dummykörper nach Anspruch 1 bis 6,
**dadurch gekennzeichnet, dass**
die Scheiben (5) und (6) auswechselbar sind.

8. Dummykörper nach Anspruch 1 bis 7,
**dadurch gekennzeichnet, dass**
Messsonden und/oder Messaufnehmer an beliebiger Stelle an und zwischen den Scheiben (5; 6) angeordnet sind.

9. Dummykörper nach Anspruch 1 bis 8,
**dadurch gekennzeichnet, dass**
zur Verstellung der Scheiben (5; 6) die Scheiben (5; 6) mit Langlöchern (7) versehen sind.

10. Dummykörper nach Anspruch 1 bis 9,
**dadurch gekennzeichnet, dass**
die weicheren Scheiben (5) aus einem Kunststoff und die härteren Scheiben (6) aus Metall, beispielsweise Aluminium, oder einem harten Kunststoff bestehen.

11. Dummykörper nach Anspruch 1 bis 10,
**dadurch gekennzeichnet, dass**
der Dummykörper von einem hautähnlichen Material umspannt ist.

12. Dummykörper nach Anspruch 1 bis 11,
**dadurch gekennzeichnet, dass**
der Dummykörper mit einem textilen Material bekleidet ist.

13. Dummykörper nach Anspruch 1 bis 12,
**dadurch gekennzeichnet, dass**
die Scheiben (5; 6) durch Spannmittel, beispielsweise durch die Langlöcher (7) geführte Schrauben mit Muttern, miteinander verspannbar sind.

14. Dummykörper nach Anspruch 1 bis 13,
**dadurch gekennzeichnet, dass**
die Scheiben (5; 6) variabel zueinander verstellbar sind.

15. Dummykörper nach Anspruch 1 bis 14,
**dadurch gekennzeichnet, dass**
die Oberschenkel (1) des Dummykörpers auf die Sitzfläche eines Sitzes, der Beckenbereich (2) und der Rückenbereich des Dummykörpers an die Rückenlehne und die Arme des Dummykörpers auf den Armlehnen aufsetzbar sind.

16. Dummykörper nach Anspruch 1 bis 15,
**dadurch gekennzeichnet, dass**
die Scheiben (5) und/oder (6) in Längsrichtung in mehrere einzeln verstellbare Teilstücke unterteilt sind.

17. Dummykörper nach Anspruch 1 bis 16,
**dadurch gekennzeichnet, dass**
die Scheiben (5) und/oder (6) mit einer Heizvorrichtung versehen sind.

18. Dummykörper nach Anspruch 1 bis 17,
**dadurch gekennzeichnet, dass**
die weicheren Scheiben (5) an der Berührungsseite mit dem Sitz- oder Liegemöbel (3) mit einem Profil versehen sind.
